# EUROPEAN PATENT APPLICATION

(11) **EP 2 328 120 A1**
(43) Date of publication of application: **01.06.2011**
(21) Application number: 10192114.6
(22) Date of filing: 22.11.2010
(51) Int. Cl.: G06Q 10/00, G06Q 30/00

(54) **Method and apparatus for facilitating identity resolution**

(30) Priority: 25.11.2009 US 626209
(71) Applicant: Nokia Corporation, 02150 Espoo (FI)
(72) Inventor: Battestini, Agathe, San Francisco, CA 09110 (US); Setlut, Vidya, Cupertino, CA 95014 (US); Horii, Hiroshi, Burlingame, CA 94010 (US)
(74) Representative: Nokia Corporation

(57) **Abstract**

A method, apparatus, and computer program product are therefore provided for an identity resolution application to handle identity resolution issues that arise when data regarding a persona is available from multiple sources. A method may be provided that includes receiving an indication that a first profile represents a persona of interest, searching for potential profile matches that are at least partially related to the persona of interest, and assessing a confidence level that the potential profile match belongs to the persona of interest. The method may further include providing for presentation of a potential profile match and receiving a confirmation that a potential profile match belongs to the persona of interest where the potential profile match then becomes a confirmed profile match. The first profile may comprise a plurality of data elements related to the persona of interest.

## Description

### TECHNOLOGICAL FIELD

Example embodiments of the present invention relate generally to identity resolution between multiple identity profiles and, in particular, to provide mechanisms for visual affordances in user interfaces, such as to handle identity resolution issues when these interfaces provide user's integrated information from different sources.

### BACKGROUND

Identity resolution is a semantic reconciliation activity as applied to people and organizations. This analytic processing is used to determine when a single identity is the same despite being described differently by different observers. In its most basic form this process involves determining with certainty that *Bill R Carroll,* for example, at *130 Main Street, Las Vegas, Nevada* is the same person as *William Randal Carol* at *130 Maine Ave, Las Vegas, NV.* Identity resolution is most frequently quantified in terms of a confidence measure, for example in the form of a percentage where 0% indicates least confident while 100% indicates most confident.

Social networking applications offer people easy ways to stay connected, by sharing their whereabouts, their thoughts, and social media such as photos and videos they create. In addition, mobile devices have become increasingly popular as the device of choice from which users access and interact with online content. The rise of internet applications that let people create, edit, publish, and share media online implies that the digital footprint of people increases as well, and that people may utilize different accounts with the various internet applications to which they subscribe. This multiplicity of accounts, in turn, creates redundancy in data across these multiple services. Thus, the question of consolidating redundant information arises when one uses multiple sources to obtain information. Typically the identity resolution procedure involves identifying the newly presented facts and linking them to their previous mentions. Once the information coming from different sources (e.g., textual documents, web pages, blogs, social networking sites like Twitter and Facebook, emails, etc.) is interlinked and the noise of redundancy and incompleteness is minimized, it can be then easily queried and used for various tasks.

One persona (e.g., a person or organization) may use multiple online applications with different online identities or profiles. These profiles or identities may be referred to by different attributes, such as a username. For example, a person Paul J. Smith may have a Flickr account to share photos identified by *PSmith234,* a Facebook profile identified by *Paul Smith,* a blog on a blogging website identified by *Paul's Rants,* a Google email account of *paul.smith@gmail.com,* an instant message account on MSN identified by *smithp55*, etc. Each online profile may contain other information details, such as first name, last name, country, city, address, email addresses, phone numbers, education history, employment history, etc. As such, it may be difficult to maintain all profiles with current information and people accessing these profiles may be confused by information that doesn't agree between the profiles.

### BRIEF SUMMARY

A method, apparatus, and computer program product are therefore provided for an identity resolution application to handle identity resolution issues that arise when data regarding a persona is available from multiple sources.

Embodiments of the invention may provide a method, apparatus and computer program product for employment in a web based, or other network based operating environment. As a result, for example, device users may enjoy improved capabilities with respect to applications and services accessible via the device.

In one embodiment of the present invention, a method is provided that includes receiving an indication that a first profile represents a persona of interest, searching for potential profile matches that are at least partially related to the persona of interest, and assessing a confidence level that the potential profile match belongs to the persona of interest. The method further includes providing for presentation of a potential profile match and receiving a confirmation that a potential profile match belongs to the persona of interest where the potential profile match then becomes a confirmed profile match. The first profile may comprise a plurality of data elements related to the persona of interest.

Embodiments of the method may further define the providing for presentation of a potential profile match to include providing for display of a potential profile match and differentiating data elements that match between the first profile and the potential profile match. The differentiating data elements may include augmenting the visual appearance of the data elements. The first profile may include a picture of the persona of interest. The method may further include merging the confirmed profile match with the first profile. Providing for presentation of a potential profile match may also include providing for the display of a plurality of potential profile matches and providing an indication of the confidence level of each of the potential profile matches.

According to another embodiment of the invention, an apparatus is provided that includes at least one processor and at least one memory including computer program code. The at least one memory and the computer program code are configured to, with the at least one processor, cause the apparatus to receive an indication that a first profile represents a persona of interest, search for potential profile matches that are at least partially related to the persona of interest, and assess a confidence level that a potential profile match belongs to the persona of interest. The apparatus may further be caused to provide for presentation of a potential profile match and receive a confirmation that a potential profile match belongs to the persona of interest, wherein the potential profile match becomes a confirmed profile match. The first profile may comprise a plurality of data elements related to the persona of interest. Providing for presentation of a potential profile match may include providing for display of a potential profile match and differentiating data elements that match between the first profile and the potential profile match. The differentiating data elements may include augmenting the visual appearance of the data elements. The first profile may include a picture of the persona of interest. The apparatus may further be configured to merge the confirmed profile match with the first profile. Providing for presentation of a potential profile match may also include providing for the display of a plurality of potential profile matches and providing an indication of the confidence level of each of the potential profile matches.

According to yet another embodiment of the invention, a computer program product is provided that includes at least one computer-readable storage medium having computer-executable program code instructions stored therein. The computer-executable program code instructions of this embodiment include program code instructions for receiving an indication that a first profile represents a persona of interest, searching for potential profile matches that are at least partially related to the persona of interest, and assessing a confidence level that the potential profile match belongs to the persona of interest. Further, the program code instructions include program code instructions for providing for presentation of a potential profile match and receiving a confirmation that a potential profile match belongs to the persona of interest where the potential profile match then becomes a confirmed profile match. The first profile may comprise a plurality of data elements related to the persona of interest.

Embodiments of the computer program product may further define the providing for presentation of a potential profile match to include providing for display of a potential profile match and differentiating data elements that match between the first profile and the potential profile match. The differentiating data elements may include augmenting the visual appearance of the data elements. The first profile may include a picture of the persona of interest. The program code instructions may include program code instructions for merging the confirmed profile match with the first profile. Providing for presentation of a potential profile match may also include providing for the display of a plurality of potential profile matches and providing an indication of the confidence level of each of the potential profile matches.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

FIG. 1 is a block diagram of a system for employing an identity resolution application according to one embodiment of the present invention;

FIG. 2 is a schematic block diagram of a mobile terminal according to one embodiment to the present invention;

FIG. 3 is a graph illustrating a visual representation of the identity resolution application according to an example embodiment of the present invention;

FIG. 4 illustrates a user device employing an identity resolution application according to an example embodiment of the present invention;

FIG. 5 illustrates a user device employing an identity resolution application according to another example embodiment of the present invention;

FIG. 6 illustrates a user device employing an identity resolution application according to another example embodiment of the present invention;

FIG. 7 illustrates a user device employing an identity resolution application according to the example embodiment of FIG. 6;

FIG. 8 illustrates a user device employing an identity resolution application according to another example embodiment of the present invention; and

FIG. 9 is a flowchart illustrating a method of an identity resolution application according to an example embodiment of the present invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information" and similar terms may be used interchangeably to refer to data capable of being transmitted, received and/or stored in accordance with embodiments of the present invention. Moreover, the term "exemplary", as used herein, is not provided to convey any qualitative assessment, but instead merely to convey an illustration of an example. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

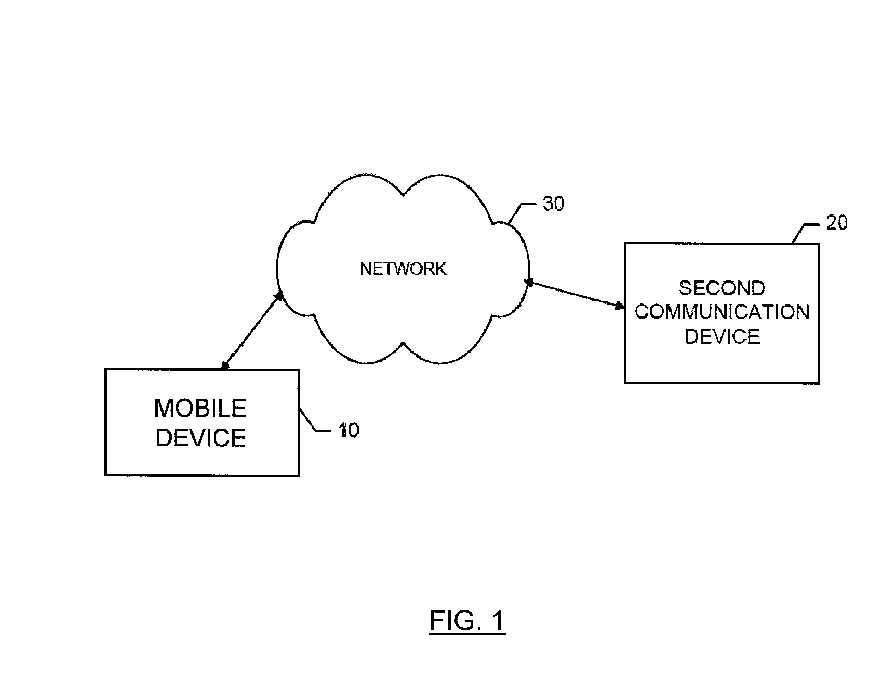

FIG. 1 illustrates a generic system diagram in which a device such as a mobile terminal 10, which may benefit from embodiments of the present invention, is shown in an exemplary communication environment. As shown in FIG. 1, an embodiment of a system in accordance with an example embodiment of the present invention may include a first communication device (e.g., mobile terminal 10) and a second communication device 20 capable of communication with each other via a network 30.

The network 30 may include a collection of various different nodes, devices or functions that may be in communication with each other via corresponding wired and/or wireless interfaces. As such, the illustration of FIG. 1 should be understood to be an example of a broad view of certain elements of the system and not an all inclusive or detailed view of the system or the network 30. Although not necessary, in some embodiments, the network 30 may be capable of supporting communication in accordance with any one or more of a number of first-generation (1G), second-generation (2G), 2.5G, third-generation (3G), 3.5G, 3.9G, fourth-generation (4G) mobile communication protocols, Long Term Evolution (LTE), and/or the like.

One or more communication terminals such as the mobile terminal 10 and the second communication device 20 may be in communication with each other via the network 30 and each may include an antenna or antennas for transmitting signals to and for receiving signals from a base site, which could be, for example a base station that is a part of one or more cellular or mobile networks or an access point that may be coupled to a data network, such as a local area network (LAN), a metropolitan area network (MAN), and/or a wide area network (WAN), such as the Internet. In turn, other devices such as processing elements (e.g., personal computers, server computers or the like) may be coupled to the mobile terminal 10 and the second communication device 20 via the network 30. By directly or indirectly connecting the mobile terminal 10 and the second communication device 20 and other devices to the network 30, the mobile terminal 10 and the second communication device 20 may be enabled to communicate with the other devices or each other, for example, according to numerous communication protocols including Hypertext Transfer Protocol (HTTP) and/or the like, to thereby carry out various communication or other functions of the mobile terminal 10 and the second communication device 20, respectively.

Furthermore, although not shown in FIG. 1, the mobile terminal 10 and the second communication device 20 may communicate in accordance with, for example, radio frequency (RF), Bluetooth (BT), Infrared (IR) or any of a number of different wireline or wireless communication techniques, including LAN, wireless LAN (WLAN), Worldwide Interoperability for Microwave Access (WiMAX), WiFi, ultra-wide band (UWB), Wibree techniques and/or the like. As such, the mobile terminal 10 and the second communication device 20 may be enabled to communicate with the network 30 and each other by any of numerous different access mechanisms. For example, mobile access mechanisms such as wideband code division multiple access (W-CDMA), CDMA2000, global system for mobile communications (GSM), general packet radio service (GPRS) and/or the like may be supported as well as wireless access mechanisms such as WLAN, WiMAX, and/or the like and fixed access mechanisms such as digital subscriber line (DSL), cable modems, Ethernet and/or the like.

In example embodiments, either of the first communication device and the second communication device 20 may be mobile or fixed communication devices. Thus, for example, the mobile terminal 10 and the second communication device 20 could be, or be substituted by, any of personal computers (PCs), personal digital assistants (PDAs), wireless telephones, desktop computers, laptop computers, mobile computers, cameras, video recorders, audio/video players, positioning devices, game devices, television devices, radio devices, or various other like devices or combinations thereof.

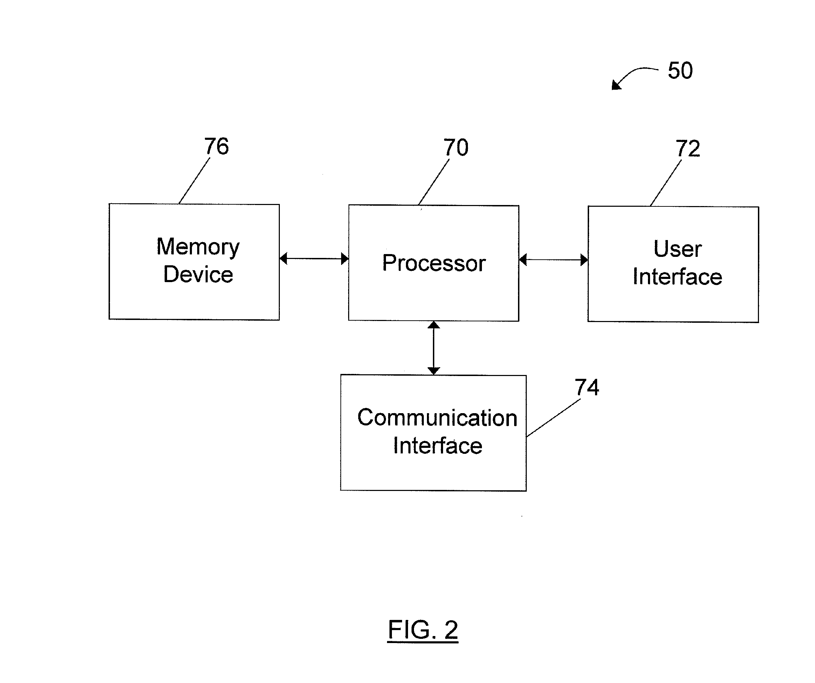

FIG. 2 illustrates a schematic block diagram of an apparatus for facilitating an identity resolution application according to an example embodiment of the present invention. The apparatus 50 of FIG. 2 may be employed, for example, on or as a communication device (e.g., the mobile terminal 10 and/or the second communication device 20) or a variety of other devices both mobile and fixed (such as, for example, any of the devices listed above). Alternatively, embodiments may be employed on a combination of devices. Accordingly, some embodiments of the present invention may be embodied wholly at a single device (e.g., the mobile terminal 10) or by devices in a client/server or distributed computing relationship. Furthermore, it should be noted that the devices or elements described below may not be mandatory and thus some may be omitted in certain embodiments.

As shown, the apparatus 50 may include or otherwise be in communication with a processor 70, a user interface 72, a communication interface 74 and a memory device 76. The memory device 76 may include, for example, volatile and/or non-volatile memory. The memory device 76 may be configured to store information, data, applications, instructions or the like for enabling the apparatus to carry out various functions in accordance with exemplary embodiments of the present invention. For example, the memory device 76 could be configured to buffer input data for processing by the processor 70. Additionally or alternatively, the memory device 76 could be configured to store instructions for execution by the processor 70. As yet another alternative, the memory device 76 may be one of a plurality of databases that store information and/or media content.

The processor 70 may be embodied in a number of different ways. For example, the processor 70 may be embodied as various processing means such as processing circuitry, a coprocessor, a controller or various other processing devices including integrated circuits such as, for example, an ASIC (application specific integrated circuit), an FPGA (field programmable gate array), a hardware accelerator, or the like. In an exemplary embodiment, the processor 70 may be configured to execute instructions stored in the memory device 76 or otherwise accessible to the processor 70.

Meanwhile, the communication interface 74 may be any means such as a device or circuitry embodied in either hardware, software, or a combination of hardware and software that is configured to receive and/or transmit data from/to a network and/or any other device or module in communication with the apparatus. In this regard, the communication interface 74 may include, for example, an antenna (or multiple antennas) and supporting hardware and/or software for enabling communications via Bluetooth signaling protocol or with a wireless communication network. In fixed environments, the communication interface 74 may alternatively or also support wired communication. As such, the communication interface 74 may include a communication modem and/or other hardware/software for supporting communication via cable, digital subscriber line (DSL), universal serial bus (USB) or other mechanisms.

The user interface 72 may be in communication with the processor 70 to receive an indication of a user input at the user interface 72 and/or to provide an audible, visual, mechanical or other output to the user. As such, the user interface 72 may include, for example, a keyboard, a mouse, a joystick, a display, a touch screen, a microphone, a speaker, or other input/output mechanisms. In an exemplary embodiment in which the apparatus is embodied as a server or some other network devices, the user interface 72 may be limited, or eliminated. However, in an embodiment in which the apparatus is embodied as a communication device (e.g., the mobile terminal 10), the user interface 72 may include, among other devices or elements, any or all of a speaker, a microphone, a display, a keyboard or the like.

The apparatus 50 may be configured to access a network, such as the internet, via the communications interface 74. When using internet applications such as blogging, media sharing, or social network websites, users create profiles that can be accessible by other people via a web browser, or programmatically by applications via Application Programming Interfaces (APIs).

Identity resolution often relies on a variety of data sources. Drawing on multiple sources of data, internal and external, public and private, identity resolution unwinds multiple degrees of business, friendship, and familial relationships. With large volumes of information comes an increasing possibility that a name will appear in several forms, that the same name will refer to different people, and that data input or other types of errors will occur. Thus, identity resolution is extremely difficult for computers to do well. Identity resolution is particularly challenging because: a) personal information is dynamic and data collection methods can result in misspelled, inverted, or truncated information; b) automated identity resolution may result in a confidence measure, not a certainty that records are the same; and c) identity features and their values vary across cultures.

In order to create an ideal user experience, it is advantageous that the user interface facilitating the identity resolution takes into account the imperfectness of the computer system so that the user is aware and has the choice of overriding the interface. Embodiments of the present invention may include visual affordances that can be incorporated into user interfaces and services to provide suggestions and cues to the user to better expose the imperfections of the identity resolution process, yet still allowing the interfaces and services to be usable. Applications may benefit from a more accurate aggregation of data related to a persona. Such applications are, but not limited to phonebooks, email editors, collaboration tools such as wiki or Customer Relationship Management systems, feed aggregators, mashup services, etc.

Described herein are new visual affordances that can be incorporated into user interfaces of applications or services executed, for example, by apparatus 50 to provide suggestions and cues to a user to better expose the imperfections of the identity resolution process. Embodiments of the present invention may use existing off-the-shelf identity resolution algorithms and provide a new way of exposing the imperfections of the identity resolution process in the interface such that the trust and the user interface are not compromised.

An underlying identity resolution process may retrieve online profiles and match the profiles with each other or with another set of profiles (for example, those stored locally in a contacts list on a mobile device). The result of the matching process may be a list of confidence measures for each pair of profiles; the confidence measure representing how well the two profiles match.

Visual affordance target applications and services on desktop computers or mobile devices may include user interfaces for viewing, searching, and/or browsing profiles that can be locally or remotely stored (e.g., internet applications), and associating and merging a profile with another profile when they relate to the same persona. The visual affordances a) convey to the user what profiles the system finds similar to another profile and what the confidence level is between them; b) provide easier visualization of how two profiles match and what portions of each profile are exactly or partially similar to each other; and c) offer the user a view of how the information contained in the two profiles can be merged with each other into one of the profiles.

### MATCHING PROCESS

In some embodiments of the present invention, the matching process may be implemented so that the result is a graph, where each node is a profile and a link between two nodes represents a matching between the two profiles, which may be the case when two profiles may belong to the same persona. Each link may have a matching confidence level that represents the system's confidence in asserting that the two profiles belong to the same persona. For example, a value of 1.0, or 100% for the confidence level may represent that the two profiles belong to the same persona while a confidence level of 0.0 or 0% may represent that the two profiles do not belong to the same persona. A confidence level between 0.0 (0%) and 1.0 (100%) may indicate that there is a possibility that the two profiles belong to the same persona.

An exemplary implementation of such matching processes can make use of any of the existing string distance functions such as Levenshtein's, Jaro, Smith Waterman, or the equality functions to compute the distance between two strings of characters. For each pair of profiles, the process may compute a confidence measure by computing a weighted sum of the string distances between selected attributes from each profile. The selected attributes can be one or a combination of the following attributes: full name, first name, last name, email addresses, address, city, zip code, state, country, phone numbers, fax numbers, photo, etc. In addition, the matching process could make use of a face recognition algorithm to match profiles that contain a photo. The similarity between the photos associated with the profile could be taken into account to compute the confidence measure.

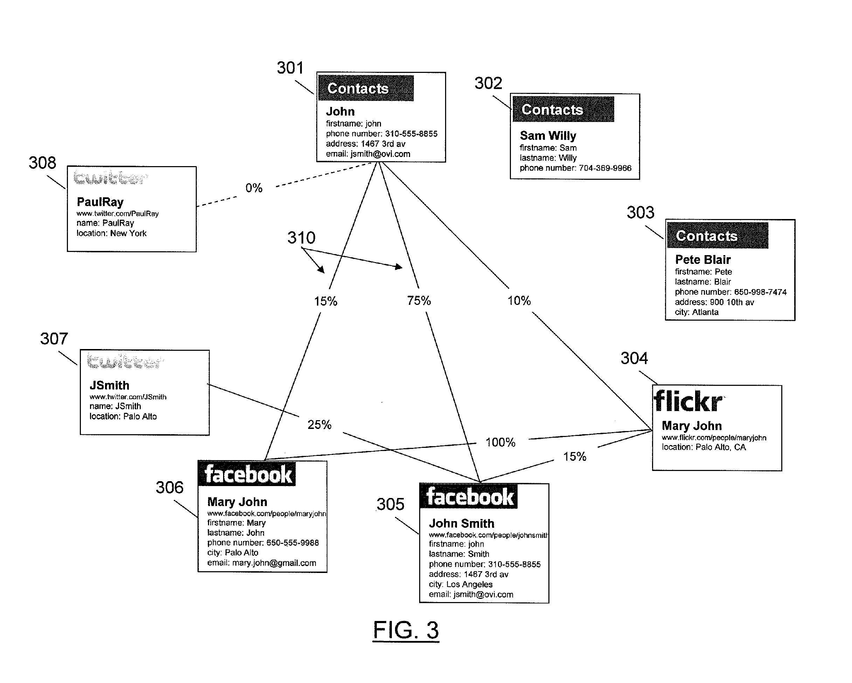

FIG. 3 illustrates an example embodiment of a graph according to the description above where each of the nodes (301-308) is a profile of a contact in different social networks and applications. The confidence measure between two profiles 310 indicates the confidence level that the two profiles belong to the same persona. Links between profiles that have 0% confidence level are not shown but are implicit in the figure.

### VISUAL RULES

For a given profile, *PA,* the list of profiles *P1* ...*m* that may relate to the same identity may be presented to the user. All of the profiles linked in the graph to PA with a confidence measure that is greater than a threshold value v may be selected and ranked according to the confidence measure. Each selected profile may be visualized to convey both the provenance, or source of the profile and the identity. Different visual rules can be applied to convey the confidence measure of the profiles presented. Color scheme, color effects, and transparency effects may be applied to a visual presentation of a profile to contrast the profiles with a high matching confidence measure, possibly using low transparency, and a low confidence measure, possibly using a higher level of transparency. Additionally, different colors may be used to convey confidence measures such as green for high confidence, red for low confidence. Each profile may be rendered in such a way that at least the provenance of the profile (the source from which the profile was retrieved) and at least one detail of the identity (identification of the profile, first name, last name, photo, etc.) may be shown. For example, referring back to FIG. 3, reference numbers 301-303 may have a first color of background or text representing Contacts, such as those in a user's mobile device, while reference number 304 may have a second background or text color representing Flickr, and so on.

### VISUAL REPRESENTATION OF THE CONFIDENCE MEASURE AFTER AUTOMATIC SELECTION

Embodiments of the present invention may use visual rules to indicate the status of a profile with respect to another profile. For example, if an individual is certain that a first profile corresponds to the persona of interest; they may confirm this correspondence within the identity resolution application. Upon confirmation, the profile that was confirmed may change a visual effect of the profile, such as edges, borders, colors, background, transparency, etc. A different visual effect may be applied to those profiles that have been confirmed to be of the persona of interest by another system, such as a social network. Further visual cues may be used to indicate that another individual has confirmed that a profile is confirmed to be of the persona of interest. Further embodiments may include different visual rules that can be used to convey that the automatically selected profile, by the identity resolution application, may be incorrect.

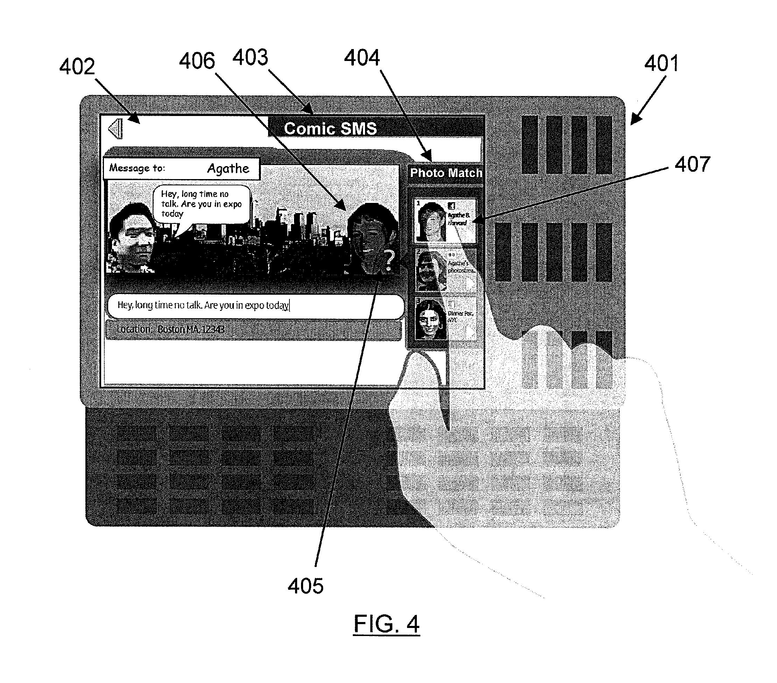

An example embodiment of visual rules that may be used is illustrated in FIG. 4 in which the visual rule includes the addition of a layer that contains a symbol or other information. The embodiment illustrated in FIG. 4 includes a user device 401, which may be an embodiment of the apparatus 50 of FIG. 2, with a display 402. The user is in an application 403 entitled "Comic SMS" using an identity resolution application that includes "Photo Match" 404. According to the illustrated embodiment, the top ranked profile according to the confidence measure may be selected and one or several details are used in the user interface. For example, as shown, a layer with a question mark 405 has been added on top of the right profile picture 406 in the comic rendering. Other details such as profile name, address, or link, etc. may be overlaid with a layer containing a question mark or other symbol. In the embodiment illustrated in FIG. 4, the question mark may represent that the picture was added by the identity resolution application as the highest confidence profile match, but it has yet to be confirmed by the user. The "photo match" 404 at the right side of the display may present other profiles that the user can select from if the one chosen by the identity resolution application is incorrect, thus enabling a user to override the best match as determined by computer matching algorithms. Other visual rules that may be used include compiling the top *n* ranked profiles according to the confidence measure and composing details from the selected profiles together. For example, the photos associated with the different profiles may be arranged into a mosaic or grid format. If the desired detail of a profile is an image, different image processing techniques may be applied to convey to the user that the selection may be incorrect, such as blurring, distortion, warping, skewing, etc.

### VISUALIZATION OF THE DETAILS OF A PROFILE CONTAINING DETAILS FROM DIFFERENT PROFILES

Example embodiments of the present invention may include a displayed profile that includes details from one or several profiles, such as when several profiles have been merged together into a single profile. It may be desirable in some embodiments to convey to the user the provenance of the details (i.e., their source). One method of indicating the provenance of the details may be to group the details according to their source. Another may include a distinctive color scheme associated with each source from which the different profiles come. The color of the text or the background behind the text may be altered based on the source. A further method may include the addition of a symbol, image, or icon. For example, the logo of the application or service from which the profile details were derived can be displayed together with the detail itself. Yet another method may include the addition of lines or arrows such that the details that come from the same profiles are visually linked to one another. These methods may be used alone or in combination with each other to achieve the desired outcome. Other visual cues may be possible to further group together details from the same source.

### SUGGESTING PROFILE ASSOCIATIONS

Example embodiments of the present invention may include a list of different profiles where different sources of data were used to retrieve the profiles, and for which new associations were discovered from the graph. Embodiments may include methods to suggest the association of different profiles including those that may not be as obvious without the suggestion. Methods to implement the aforementioned suggestions may include ranking and grouping the suggested new associations wherein all profiles are ordered according to a given criteria as defined by the user interface, for example, alphabetically. When two or more profiles have a matching confidence measure greater than the threshold value v, the profiles may be moved or duplicated and grouped together. Embodiments may include suggesting new associations at the top of the list of profiles, such that when new associations have been found in the graph and when the confidence measure is greater than a threshold value v, the profiles that are suggested to be associated together may be moved to the top of the list. Further embodiments may include visual effects, such as highlights, color schemes, transparency effects, borders, symbols, and the like to be used to translate the confidence value for the suggested new association.

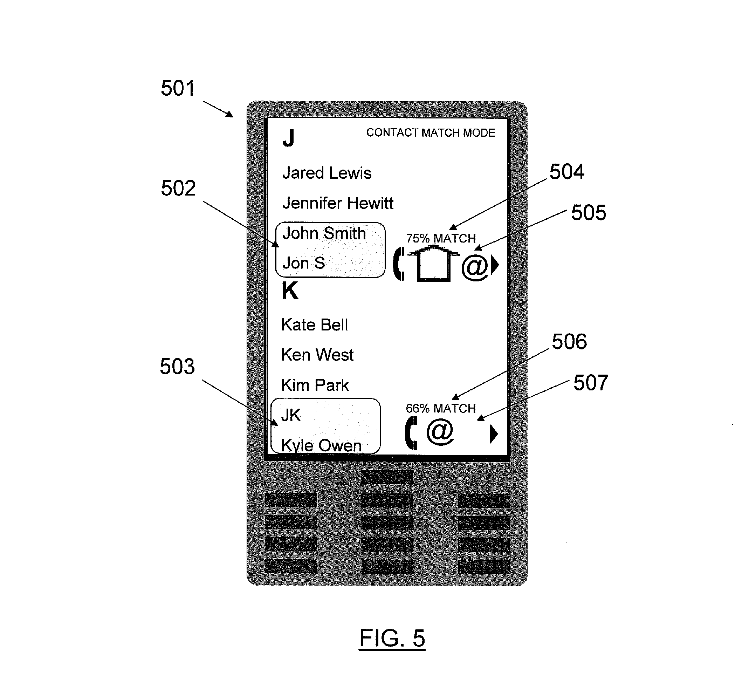

An example embodiment of suggesting profile associations is illustrated in FIG. 5, wherein the user device 501 of the illustration is viewing contacts within the address book of the device. The identity resolution application indicates suggested profile associations at 502 and 503. For the suggested profile association of 502, a possible match is indicated between *John Smith* and *Jon S.* The confidence level is indicated as a 75% match at 504 and the symbols at 505 may indicate that the matched profile data includes a phone number, address, and email address. Similarly, the suggested profile association at 503 indicates a possible match between JK and *Kyle Owen* with a 66% match 506 including a matched phone number and email address 507.

### MERGING VIEW

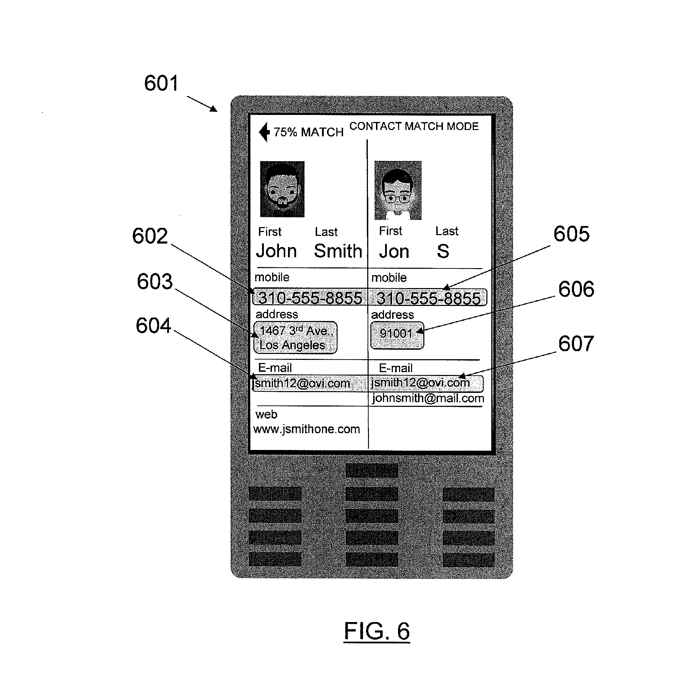

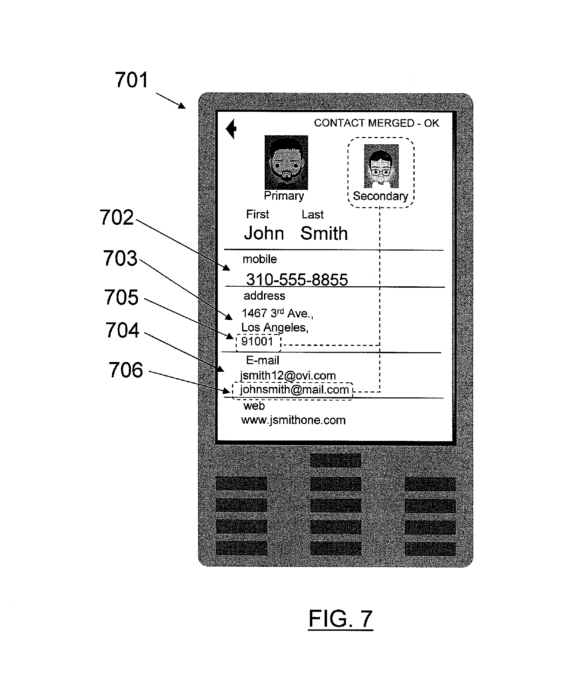

Example embodiments of the present invention may include a merging view where two or more profiles are shown together on a display, such as in a user device. Differing visual cues may be used to help the user identify which details are similar, which details can be merged, and suggestions for merging. An example embodiment of a merging view is illustrated in FIG. 6. In the illustrated embodiment, each of the two profiles to be evaluated for merging are shown in a column. The details that are similar or belong to the same type of attribute (e.g., first name, last name, address, email, etc.) may be placed so that they are displayed on the same line in all columns. Visual highlights may indicate the details that are candidates to be merged or some other form of visual effect as illustrated in 602-607. As illustrated, the mobile phone numbers are the same at elements 602 and 605 which is an indicator that these profiles belong to the same persona. Similarly the email addresses of 604 and 607 are the same. The address of 603 corresponds to the zip code of 606 and may be an indicator that these profiles belong to the same persona. Another example embodiment of the identity resolution application may present a single profile (e.g., the target profile) and indicate which data fields are indicators that the profile matches another and/or the embodiment may indicate which fields differ between the target profile and the profile that may be of the same persona. FIG. 7 is an illustrative embodiment of the contacts of FIG. 6 merged into a single contact. The information that was merged from the secondary profile into the first profile may be indicated by a visual cue, such as a highlight, a different font and/or font color, or a line visually linking the photo of the first profile with the information from the first profile and the photo of the secondary profile with the information from the secondary profile as illustrated at 705 and 706, or any other visual cue such as those previously discussed.

### ILLUSTRATIVE EMBODIMENTS

An example embodiment of the identity resolution application may be implemented in a phonebook or contact list application of a desktop or mobile device to provide the functionalities described above. The contact list may provide a single point of entry to manage contact information while each contact of the contact list may be updated with links to and information from the online profiles of that contact when they exist. The identity resolution application may retrieve and match online profiles to the contact list with a user-defined confidence level using the embodiments of the invention as described above and illustrated in FIGS. 5-7.

Another example embodiment of the identity resolution application may be implemented by a communication application, such as a text messaging application. An SMS Comic example is illustrated in the embodiment of FIG. 4 wherein the application may create a graphical visualization of SMS text conversations between two (or more) contacts. To increase the visual aesthetics of the comic, the application selects a photo for the contact with whom the user is exchanging SMS text messages, even though no photo may have been previously associated by the user with that contact. In the embodiment of FIG. 4, a photo of the contact that the user is communicating with may be selected by the identity resolution application using the photo associated with the highest confidence level profile match found. As shown at 405, a question mark appears over the photo as the identity resolution application has selected this photo based on the profile data, although it may not be a profile of the correct person. The user may confirm the photo is correct, or possibly select from a list of photos that may be arranged by confidence level as determined by the identity resolution application, illustrated at 407.

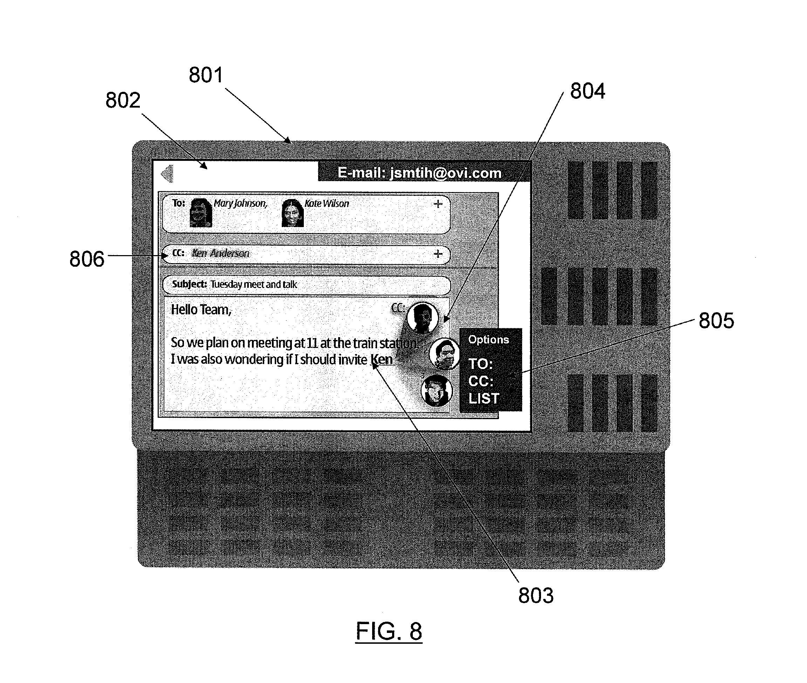

As is apparent to one of ordinary skill in the art in light of the disclosure, various applications can make use of the identity resolution application and the visual cues described herein. A further example embodiment may be an E-mail application that may leverage suggestions and visual cues related to contact matching as illustrated in FIG. 8. In the illustrated example embodiment, a user is composing an email on the display 802 of a user device 801, which may be an embodiment of the apparatus 50 of FIG. 2, and by entering a name of, or similar to, one of the user's contacts 803 in the body of the email, the identity resolution application may recognize that contact name in the email and suggest matching contacts for the name. The contact's name may be highlighted 803 in the email body to convey to the user that the application has potentially detected a keyword that has further information or options available. A list of contacts 804, each of which may be shown using their profile photo may be displayed when the user interacts with the highlighted information. The user may then select one of the photos which may then present further options 805 to the user, possibly including the options of adding the contact as a primary recipient of the email or as a carbon-copied recipient as at 806, or there could be further options. Other actions may be shown that may be application dependent and dependent on the information available for that contact.

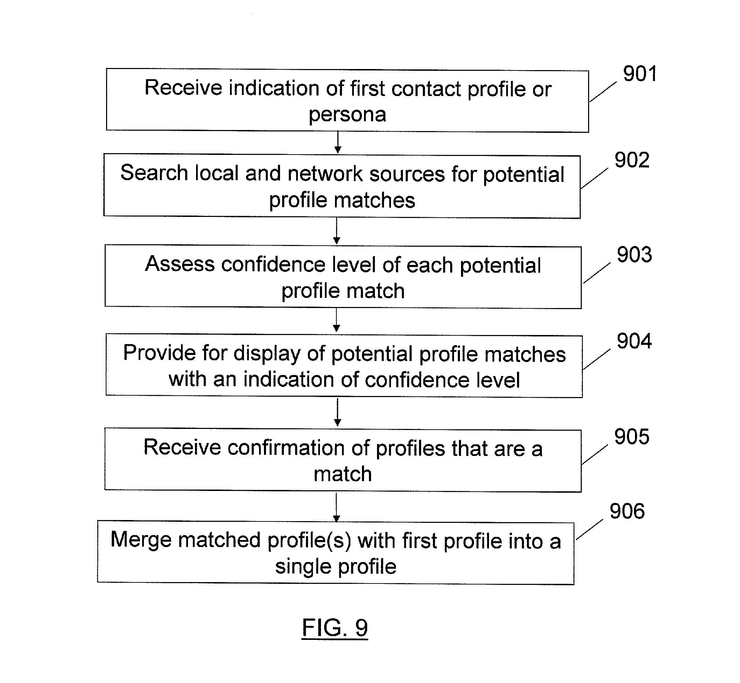

FIG. 9 is a flowchart of a system, method, and program product according to some example embodiments of the present invention. It will be understood that each block or operation of the flowchart, and combinations of blocks in the flowchart, can be implemented by various means, such as hardware, firmware, and/or a computer program product including one or more computer program instructions. For example, one or more of the procedures described above may be embodied by computer program instructions. In this regard, the computer program instructions which embody the procedures described above may be stored by a memory device of a mobile terminal or other apparatus (e.g. apparatus 50 of FIG. 2) employing embodiments of the present invention and executed by a processor (e.g. processor 70 of FIG. 2) in the mobile terminal or other apparatus. As will be appreciated, any such computer program instructions may be loaded onto a computer or other programmable apparatus (e.g., hardware) to produce a machine, such that the instructions which execute on the computer (e.g., via a processor) or other programmable apparatus implement the functions specified in the flowchart block(s) or operation(s). These computer program instructions may also be stored in a computer-readable memory that can direct a computer (e.g., the processor or another computing device) or other programmable apparatus to function in a particular manner, such that the instructions stored in the computer-readable memory produce an article of manufacture including instructions which implement the function specified in the flowchart block(s) or operation(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s) or operation(s).

Accordingly, blocks or operations of the flowcharts support combinations of means for performing the specified functions, combinations of operations for performing the specified functions and program instruction means for performing the specified functions. It will also be understood that one or more blocks or operations of the flowchart, and combinations of blocks or operations in the flowchart, can be implemented by special purpose hardware-based computer systems which perform the specified functions or operations, or combinations of special purpose hardware and computer instructions.

Referring again to FIG. 9, the illustrated method is herein described as executed on a mobile device, such as the apparatus 50 of FIG. 2, however the method may be performed on any device that has the capabilities to execute the method. At block 901, the device receives an indication of the primary contact profile (e.g., from a contact list) or an indication of the persona of interest (e.g., when searching for someone). A persona of interest may be entered in to a search application that employs the identity resolution application as one or more data elements that comprise the identity of interest, such as *John Smith, Chicago, IL.* At block 902. The identity resolution application may search locally on the device (e.g., an address book), or over a network such as the internet. Searching the internet may include searching social networking sites, blogs, email addresses, among other possibilities. At block 903, the identity resolution application assesses the confidence level of each potential profile match. The assessment of confidence level may be performed concurrently with the operation of block 902. A minimum confidence threshold may be employed at any operation wherein profiles with a confidence level below the threshold will be ignored while those above the threshold will be further used in the method. Once a list of potential profile matches has been compiled (though the list may include only a single profile, or possibly none), the potential profile matches are displayed or presented to the user at block 904. The user may then confirm profile matches at block 905, though the user may also discard profiles that the user is uncertain of, or that the user knows do not match the desired persona. Once a profile is confirmed by the user as belonging to the desired persona, the user may cause the profiles to be merged at block 906.

In an exemplary embodiment, an apparatus for performing the method of FIG. 9 may comprise a processor (e.g., the processor 70) configured to perform some or each of the operations (901-906) described above. The processor may, for example, be configured to perform the operations (901-906) by performing hardware implemented logical functions, executing stored instructions, or executing algorithms for performing each of the operations. Alternatively, the apparatus may comprise means for performing each of the operations described above. In this regard, according to an example embodiment. Examples of means for performing operations 901-906 may comprise, for example, the processor 70 and/or a computer program product containing instructions executed by the processor for implementing the identity resolution application described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving an indication that a first profile represents a persona of interest;
searching for potential profile matches that are at least partially related to the persona of interest;
assessing a confidence level that a potential profile match belongs to the persona of interest;
providing for presentation of a potential profile match; and
receiving an indication that the potential profile match either belongs to the persona of interest, or it does not belong to the persona of interest, wherein the potential profile match becomes a confirmed profile match in response to an indication that the potential profile match belongs to the persona of interest.

2. A method according to claim 1, wherein the first profile comprises a plurality of data elements related to the persona of interest.

3. A method according to claim 2, wherein the providing for presentation of a potential profile match comprises providing for display of a potential profile match and differentiating data elements that match between the first profile and the potential profile match.

4. A method according to claim 3, wherein differentiating data elements comprises augmenting the visual appearance.

5. A method according to claim 1, wherein the first profile comprises a picture of the persona of interest.

6. A method according to claim 1, further comprising merging the confirmed profile match with the first profile.

7. A method according to claim 1, wherein providing for presentation of a potential profile match comprises providing for display of a plurality of potential profile matches and providing an indication of the confidence level of each of the potential profile matches.

8. An apparatus comprising at least one processor and at least one memory including computer program code, the at least one memory and the computer program code configured to, with the at least one processor, cause the apparatus to:
receive an indication that a first profile represents a persona of interest;
search for potential profile matches that are at least partially related to the persona of interest;
assess a confidence level that a potential profile match belongs to the persona of interest;
provide for presentation of a potential profile match; and
receive an indication that the potential profile match either belongs to the persona of interest, or it does not belong to the persona of interest, wherein the potential profile match becomes a confirmed profile match in response to an indication that the potential profile match belongs to the persona of interest.

9. An apparatus according to claim 8, wherein the first profile comprises a plurality of data elements related to the persona of interest.

10. An apparatus according to claim 9, wherein the providing for presentation of a potential profile match comprises providing for display of a potential profile match and differentiating data elements that match between the first profile and the potential profile match.

11. An apparatus according to claim 10, wherein differentiating data elements comprises augmenting the visual appearance.

12. An apparatus according to claim 8, wherein the first profile comprises a picture of the persona of interest.

13. An apparatus according to claim 8, wherein the at least one memory and the computer program code are configured to, with the at least one processor, cause the apparatus to further merge the confirmed profile match with the first profile.

14. An apparatus according to claim 8, wherein providing for presentation of a potential profile match comprises providing for a display of a plurality of potential profile matches and providing an indication of the confidence level of each of the potential profile matches.

15. A computer program product comprising at least one computer readable storage medium having computer executable program code instructions for executing the method according to any of claims 1 to 7.
